# EUROPEAN PATENT SPECIFICATION

(11) **EP 1 810 901 B1**
(45) Date of publication and mention of the grant of the patent: **31.03.2010**
(21) Application number: 05779299.6
(22) Date of filing: 19.07.2005
(51) Int. Cl.: B60T 7/10

(54) **PARKING HAND BRAKE FOR VEHICLES COMPRISING A LOWERING LEVER**
HANDFESTSTELLBREMSE FÜR FAHRZEUGE MIT EINEM ABSENKHEBEL
FREIN A MAIN DE STATIONNEMENT POUR VEHICULES AVEC LEVIER DE FREIN MOBILE

(30) Priority: 06.09.2004 ES 200402134
(43) Date of publication of application: 25.07.2007
(73) Proprietor: Batz, S.Coop., 48140 Igorre (ES)
(72) Inventor: PALACIO ARGÜELLES, Joseba, E-48980 Santurtzi (ES)
(74) Representative: Igartua, Ismael
(86) International application number: PCT/ES2005/000407
(87) International publication number: WO 2006/040363

(56) References cited:
- EP-A- 0 476 208
- EP-A- 0 537 494
- EP-A- 1 300 306
- EP-A- 1 415 875
- EP-A1- 0 365 396
- DE-A1- 19 758 207
- ES-T3- 2 066 995
- GB-A- 1 428 320
- US-A- 4 212 211

## Description

### TECHNICAL FIELD

The present invention relates to parking hand brakes for motor vehicles, and more specifically, to parking hand brakes for motor vehicles in which the lever can be folded with the brake remaining in a braking position.

### PRIOR ART

Hand brakes in which the lever can be folded with the brake remaining in a braking position, and which comprise actuator means, a pawl that cooperates with a cogged sector and a rod that acts on said pawl, are already known.

In some hand brakes, the rod and the pawl are separated when the lever is folded in a rest position and the brake remains in a braking position, as occurs in European patent document EP0546927. However, both the rod and the pawl are covered by a single lever body with the result that a lateral impact on said lever may influence the pawl, said pawl possibly being freed from the cogged sector and the brake possibly moving, therefore, from a braking to an unbraking position. Said lever also covers the actuator means, with the result that a lateral impact on said lever may also influence said actuator means in such a way that the brake may move from a braking to an unbraking position.

EP476208A, DE19758207A1 and EP537494A disclose a parking hand brake for motor vehicles with a foldable lever, which comprises actuator means that may move from a braking position to a non-braking position or vice versa pivoting in relation to an axis of rotation. The lever is folded to a rest position, maintaining the actuator means in its braking position.

US4212211A discloses a parking hand brake for motor vehicles as described in the preamble of claim 1.

### DISCLOSURE OF THE INVENTION

It is an object of this invention to provide a hand brake that resolves some of the drawbacks of the prior art.

The inventive hand brake comprises an actuator means that may move from a braking position to an unbraking position or vice versa, pivoting in relation to a first axis of rotation, and a lever for making said actuator means pivot in relation to said first axis of rotation. Said lever comprises a rod in its interior, and when the actuator means is in the braking position, said lever can be depressed to a rest position, pivoting in relation to a second axis of rotation, the actuator means remaining in said braking position.

By means of the axial displacement of the rod a pawl that cooperates with a static cogged sector may be acted upon. In this way it is possible to release said pawl from the cogged sector and enable the actuator means to move from the braking position to the unbraking position.

In the rest position of the lever the pawl is separated from the rod, as a result of which a lateral impact on said rod does not affect said pawl. In addition, as the lever and the actuator means are two different bodies and as the pawl is fixed on said actuator means, a lateral impact on said lever does not affect said pawl and only partially affects said actuator, allowing to keep the brake in the braking position. At the same time, in said rest position of the lever, said lever offers a physical as well as aesthetic continuity, preventing possible damage to the user.

These and other advantages and characteristics of the invention will be made evident in the light of the drawings and the detailed description thereof.

### DESCRIPTION OF THE DRAWINGS

FIG. 1 is a side view of an embodiment of the hand brake of the invention.
FIG. 2 is a side view in cross section of the hand brake referred to in Figure 1, a braking position and an unbraking position of said brake being superimposed.
FIG. 3 is a side view in cross section of the hand brake referred to in Figure 1, a braking position of the brake with the lever unfolded and said braking position of said brake with the lever folded in a rest position being superimposed.
FIG. 4 is a side view in cross section of the hand brake referred to in Figure 1, with the lever in the rest position, the brake remaining in a braking position.
FIG. 5 is a view in profile of an intermediate element of the hand brake referred to in Figure 1.

### DETAILED DISCLOSURE OF THE INVENTION

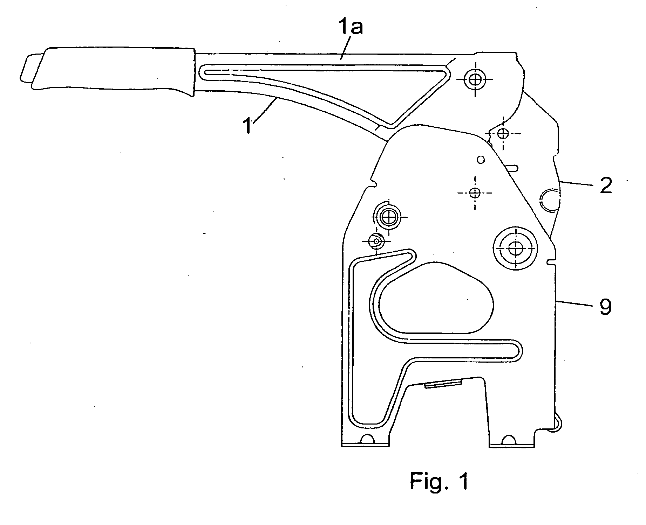

With reference to Figure 1, the hand brake of the embodiment comprises a lever 1 and actuator means 2 as main elements. The actuator means 2 is fixed to a support 9 fixed to the floor of a motor vehicle not shown in the figures.

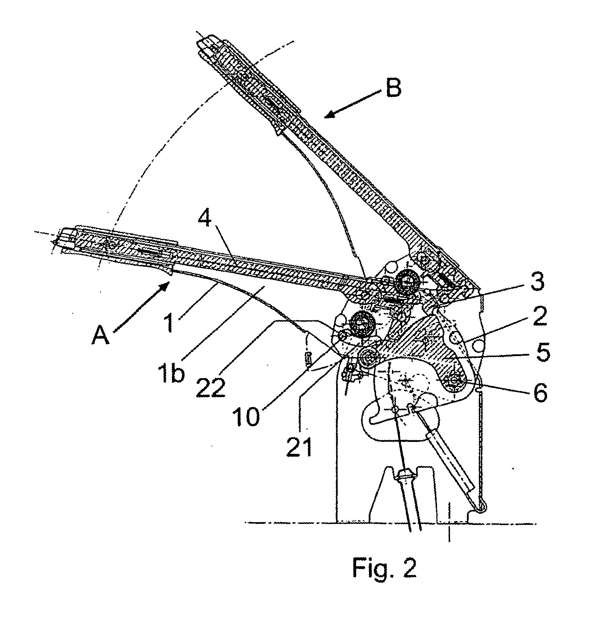

The actuator means 2 may move from a braking position B to an unbraking position A or vice versa, pivoting in relation to a first axis of rotation 6 as shown in Figure 2. The lever 1 causes said actuator means 2 to pivot in relation to said first axis of rotation 6 by means of a pin 10 fixed on the lever 1 and a groove 21 disposed on the actuator means 2. When the lever 1 is raised, the pin 10 pushes to a first end 22 of the groove 21 causing the actuator means 2 to pivot in relation to the first axis of rotation 6.

By means of the axial displacement of the rod 4, a pawl 3 that cooperates with a static cogged sector 5 can be acted upon, enabling said pawl 3 to pivot in relation to an axis 32, freeing itself from said cogged sector 5 and enabling the actuator means 2 to move from the braking position B to the unbraking position A.

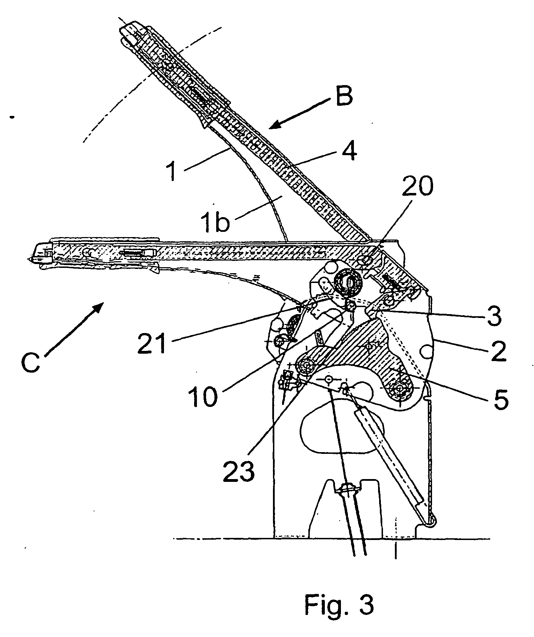

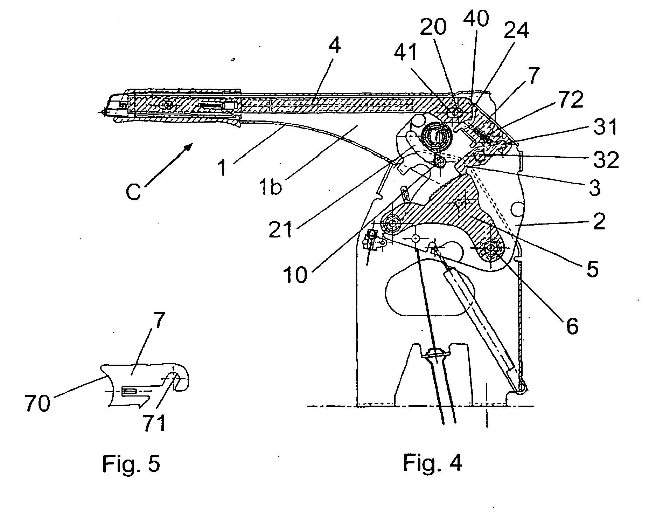

The lever 1 comprises a rod 4 in its interior, and said lever 1 may be folded to a rest position C pivoting in relation to a second axis of rotation 20, the actuator means 2 remaining in the braking position B as shown in Figure 3. The pin 10 is moved along the groove 21 until it comes up against a second end 23 of said groove 21, immobilising the lever 1, which reaches the rest position C shown in Figure 4. In said rest position C, the lever 1 enables the rod 4 and the pawl 3 to remain separate and covers, at least partially, the actuator means 2 by two facing walls 1a and 1b.

The second axis of rotation 20 is fixed on the actuator means 2 and is housed in a groove 41 disposed on the rod 4. By means of the cooperation between said second axis of rotation 20 and said groove 41 the axial displacement of the rod 4 is guided. Said axial displacement causes one rounded end 40 of the rod 4 to push a curved support surface 70 of an intermediate element 7 shown in Figure 5. A finger 31 of the pawl 3 is housed in a circular gap 71 in the intermediate element 7, as a result of which the axial displacement of said intermediate element 7 pushes the pawl 3, freeing said pawl 3 from the cogged sector 5 and enabling the actuator means 2 to move from the braking position B to the unbraking position A. When the rod 4 stops pushing the intermediate element 7, said intermediate element 7 is moved back thanks to the force exerted by a spring 72.

In the rest position C, the rod 4 cannot be displaced axially because stopper means 24 disposed on the actuator means 2 prevent it from doing so. This prevents an accidental axial displacement, ensuring a braking position B. In the embodiment shown in the figures, the stopper means 24 comprise an extension that faces the rounded end 40 of the rod 4 when the lever 1 is in the rest position C.

## Claims

1. Parking hand brake for motor vehicles with a foldable lever, which comprises actuator means (2) that may move from a braking position (B) to an unbraking position (A) or vice versa, pivoting in relation to a first axis of rotation (6); and a lever (1) for causing said actuator means (2) to pivot in relation to said first axis of rotation (6), said lever (1) comprising a rod (4) in its interior and being folded to a rest position (C) when the actuator means (2) is in the braking position (B), so that said actuator means (2) remains in said braking position (B) and the rod (4) stays separated from a pawl (3) which cooperates with a static cogged sector (5), being able to act on said pawl (3) by means of an axial displacement of the rod (4), freeing said pawl (3) and enabling the actuator means (2) to move from the braking position (B) to the unbraking position (A), said lever (1) also covering, at least partially, the actuator means (2) in said rest position (C) **characterised in that** the lever (1) is folded to the rest position (C) pivoting in relation to a second axis of rotation (20), the hand brake comprising an intermediate element (7) disposed between the rod (4) and the pawl (3), so that the axial displacement of the rod (4) causes a displacement of said intermediate element (7), said intermediate element (7) pushing said pawl (3), and the actuator means (2) comprising stopper means (24) which prevent the axial displacement of the rod (4) when the lever (1) is in the rest position (C).

2. Hand brake according to claim 1, wherein the second axis of rotation (20) is fixed on the actuator means (2) and is housed in a groove (41) disposed on the rod (4), so that by means of said second axis of rotation (20) and said groove (41) the axial displacement of the rod (4) is guided.

3. Hand brake according to any of claims 1 or 2, wherein the intermediate element (7) comprises a curved support surface (70) and the rod (4) comprises a rounded end (40) next to said support surface (70), said rounded end (40) pushing said support surface (70) when the rod (4) is displaced axially.

4. Hand brake according to any of claims 1 to 3, wherein the intermediate element (7) comprises a circular gap (71) and the pawl (3) comprises a finger (31), said finger (31) being housed in said circular gap (71).

5. Hand brake according to any of claims 1 to 4, wherein the intermediate element (7) comprises a spring (72) in order to move back said intermediate element (7) once the rod (4) stops pushing said intermediate element (7).

6. Hand brake according to any of the preceding claims 7, wherein the stopper means (24) comprise an extension that faces the rod (4) when the lever (1) is in the rest position (C).

## Patentansprüche

1. Feststellhandbremse für Kraftfahrzeuge mit einem zusammenklappbaren Hebel, umfassend eine Stellvorrichtung (2), die von der Parkstellung (B) in die Nicht-Parkstellung (A) bzw. umgekehrt umgestellt werden kann, indem er um eine erste Drehachse (6) dreht, und einen Hebel (1), mit dem verursacht wird, dass sich die Stellvorrichtung (2) um die erste Drehachse (6) dreht, wobei der Hebel (1) eine Stange (4) in seinem Inneren umfasst und in eine Ruheposition (C) zusammengeklappt wird, wenn sich die Stellvorrichtung (2) in der Parkstellung (B) befindet, so dass die Stellvorrichtung (2) in dieser Parkstellung (B) verbleibt und die Stange (4) von einer Sperrklinke (3) getrennt bleibt, die mit einem statischen gezahnten Abschnitt (5) zusammenarbeitet und so in der Lage ist, über eine axiale Verlagerung der Stange (4) auf die Sperrklinke (3) einzuwirken, wodurch die Sperrklinke (3) freigegeben wird und es der Stellvorrichtung (2) ermöglicht, von der Parkstellung (B) in die Nicht-Parkstellung (A) verstellt zu werden, wobei der Hebel (1) außerdem zumindest teilweise die Stellvorrichtung (2) in der Ruheposition (C) abdeckt, **dadurch gekennzeichnet, dass**
der Hebel (1) in die Ruheposition (C) zu einer zweiten Drehachse (20) zusammengelegt wird, wobei die Handbremse ein zwischen der Stange (4) und der Sperrklinke (3) angeordnetes mittleres Element (7) umfasst, so dass die axiale Verlagerung der Stange (4) die Verstellung dieses mittleren Elements (7) verursacht, wodurch das mittlere Element (7) gegen die Sperrklinke (3) drückt, und die Stellvorrichtung (2) einen Anschlagsvorrichtung (24) umfasst, der die axiale Verlagerung der Stange (4) unterbindet, wenn sich der Hebel (1) in der Ruheposition (C) befindet.

2. Handbremse gemäß Anspruch 1, wobei die zweite Drehachse (20) auf der Stellvorrichtung (2) befestigt und in einer Rille (41) untergebracht ist, die auf der Stange (4) angebracht ist, so dass über diese zweite Drehachse (20) und Rille (41) die axiale Verstellung der Stange (4) geführt wird.

3. Handbremse gemäß Anspruch 1 oder 2, wobei das mittlere Element (7) eine gebogene Haltefläche (70) und die Stange (4) ein abgerundetes Ende (40) neben dieser Haltefläche (70) umfasst, wobei das abgerundete Ende (40) auf diese Haltfläche (70) drückt, wenn die Stange (4) axial verstellt wird.

4. Handbremse gemäß Anspruch 1 bis 3, wobei das mittlere Element (7) einen kreisförmigen Spalt (71) und die Sperrklinke (3) einen Finger (31) umfassen, wobei der Finger (31) in diesen kreisförmigen Spalt (71) eingreift.

5. Handbremse gemäß Anspruch 1 bis 4, wobei das mittlere Element (7) eine Feder (72) umfasst, um das mittlere Element (7) zurück zu bewegen, sobald die Stange (4) nicht mehr gegen das mittlere Element (7) drückt.

6. Handbremse gemäß einem der vorausgehenden Ansprüchen, wobei die Anschlagsvorrichtung (24) eine zur Stange (4) zeigende Verlängerung umfasst, wenn sich der Hebel (1) in der Ruheposition (C) befindet.

## Revendications

1. Frein à main de stationnement pour les véhicules automobiles avec levier pliable qui comprend un dispositif d'actionnement (2) pouvant passer d'une position de freinage (B) à une position d'accélération (A) ou inversement, qui pivote par rapport à un premier axe de rotation (6) ; et un levier (1) qui permet audit dispositif d'actionnement (2) de pivoter par rapport audit premier axe de rotation (6), ledit levier (1) qui comprend une tige (4) et qui se replie en position de repos (C) lorsque le dispositif d'actionnement (2) est en position de freinage (B) de manière à ce que ledit dispositif d'actionnement (2) reste dans ladite position de freinage (B) et la tige (4) reste séparée d'un arrêtoir (3) qui coopère avec un secteur denté statique (5) capable d'agir sur ledit arrêtoir (3) à travers un déplacement axial de la tige (4) qui libère ledit arrêtoir (3) et permettant au dispositif d'actionnement (2) de passer de la position de freinage (B) à la position d'accélération (A), ledit levier (1) recouvrant également, au moins partiellement, le dispositif d'actionnement (2) dans ladite position de repos (C) **caractérisé en ce que** le levier (1) est replié en position de repos (C) et pivote par rapport à un deuxième axe de rotation (20), le frein à main comprenant un élément intermédiaire (7) disposé entre la tige (4) et l'arrêtoir (3) de telle manière que le déplacement axial de la tige (4) entraîne le déplacement dudit élément intermédiaire (7), ledit élément intermédiaire (7) poussant ledit arrêtoir (3) et le dispositif d'actionnement (2) intégrant un obturateur (24) qui empêche le déplacement axial de la tige (4) lorsque le levier (1) se trouve en position de repos (C).

2. Frein à main selon la revendication 1 où le second axe de rotation (20) est fixé sur le dispositif d'actionnement (2) et est logé dans une rainure (41) disposée sur la tige (4) de telle manière qu'au moyen dudit second axe de rotation (20) et ladite rainure (41) le déplacement axial de la tige (4) est guidé.

3. Frein à main selon l'une quelconque des revendications 1 ou 2, où l'élément intermédiaire (7) comprend une surface d'appui courbée (70) et la tige (4) comprend une extrémité arrondie (40) à côté de ladite surface d'appui (70), ladite extrémité arrondie (40) poussant ladite surface d'appui (70) lorsque la tige (4) est déplacée de manière axiale.

4. Frein à main selon l'une quelconque des revendications 1 à 3 où l'élément intermédiaire (7) comprend une fente circulaire (71) et l'arrêtoir (3) comprend un doigt (31), ledit doigt (31) étant logé dans ladite fente circulaire (71).

5. Frein à main selon l'une quelconque des revendications 1 à 4 où l'élément intermédiaire (7) comprend un ressort (72) afin de pousser vers l'arrière ledit élément intermédiaire (7) une fois que la tige (4) cesse de pousser ledit élément intermédiaire (7).

6. Frein à main selon l'une quelconque des revendications précédentes où l'obturateur (24) comprend une extension qui fait face à la tige (4) lorsque le levier (1) est en position de repos (C).
